# FASCICULE DE BREVET EUROPEEN

(11) **EP 3 046 786 B1**
(45) Date de publication et mention de la délivrance du brevet: **08.01.2020**
(21) Numéro de dépôt: 14761840.9
(22) Date de dépôt: 09.09.2014
(51) Int. Cl.: B60H 1/00

(54) **INSTALLATION DE CHAUFFAGE, VENTILATION ET/OU CLIMATISATION POUR HABITACLE DE VÉHICULE AUTOMOBILE**
HEIZUNGS-, LÜFTUNGS- UND/ODER KLIMAANLAGE FÜR DEN PASSAGIERRAUM EINES KRAFTFAHRZEUGS
HEATING, VENTILATION AND/OR AIR CONDITIONING INSTALLATION FOR A MOTOR VEHICLE PASSENGER COMPARTMENT

(30) Priorité: 19.09.2013 FR 1358990
(43) Date de publication de la demande: 27.07.2016
(73) Titulaire: Valeo Systemes Thermiques, 78320 Le Mesnil Saint Denis (FR)
(72) Inventeur: LOUP, Didier, F-78310 Maurepas (FR); MARTINELL, Amanda, F-78640 Neauphle Le Chateau (FR); VINCENT, Philippe, F-85800 Givrand (FR); AILLOUD, Fabrice, F-78280 Guyancourt (FR)
(74) Mandataire: Metz, Gaëlle
(86) Numéro de dépôt international: PCT/EP2014/069156
(87) Numéro de publication internationale: WO 2015/039924

(56) Documents cités:
- WO-A1-2012/114573
- DE-A1- 19 954 308
- DE-A1-102012 004 655
- US-A1- 2012 207 593

## Description

La présente invention concerne une installation de chauffage, ventilation et/ou climatisation pour un habitacle de véhicule automobile permettant le contrôle de la température de flux d'air dans une ou plusieurs zones de l'habitacle d'un véhicule automobile. Le document DE 199 54 308 A1 décrit une telle installation.

Un véhicule automobile est couramment équipé d'une installation de chauffage, de ventilation et/ou de climatisation qui est destinée à réguler les paramètres aérothermiques de l'air distribué dans l'habitacle, en particulier la température d'un flux d'air délivré par l'installation à l'intérieur de l'habitacle.

Dans sa généralité, l'installation comprend un boîtier délimité par des cloisons à travers lesquelles sont ménagées des ouvertures, dont au moins une entrée d'air et au moins une bouche de distribution d'air.

De façon connue, le boîtier loge généralement un groupe moto-ventilateur également appelé pulseur pour faire circuler le flux d'air depuis l'entrée d'air vers la bouche de distribution d'air. Le boîtier loge aussi des moyens de traitement thermique pour réchauffer et/ou refroidir le flux d'air préalablement à sa distribution à l'intérieur de l'habitacle à travers la bouche de distribution d'air. À titre d'exemple, les moyens de traitement thermique peuvent comprendre un évaporateur qui est destiné à refroidir l'air le traversant, et un radiateur, éventuellement associé à un radiateur additionnel, qui est destiné à réchauffer l'air qui le traverse.

L'installation peut de plus comprendre plusieurs volets pour contrôler le passage d'air à travers des bouches de distribution correspondant à des sorties d'aération ou de ventilation s'ouvrant dans l'habitacle du véhicule, ou encore à une sortie de dégivrage/désembuage notamment du pare-brise du véhicule.

Par ailleurs, l'air circulant dans une telle installation peut être un flux d'air extérieur, ou le flux d'air provenant de l'habitacle circulant de nouveau dans l'installation, on parle alors de flux d'air recyclé ou recirculant, ou encore un mélange des deux. Un volet de mixage peut répartir la proportion d'air extérieur et la proportion d'air recyclé.

Lorsque la température extérieure est basse et si le flux d'air provenant de l'habitacle est recyclé pour le chauffage de l'habitacle, il existe un risque d'apparition de buée sur les vitres du véhicule, notamment sur le pare-brise. En effet, la présence des passagers dans l'habitacle contribue à charger le flux d'air recyclé en humidité qui, après un certain temps d'utilisation, se condense sur les vitres dès lors que la température extérieure permet d'atteindre le point de rosée.

Afin d'éviter ce problème, de l'air extérieur plus sec que de l'air recyclé doit de préférence être soufflé dans l'habitacle.

Cependant, cette solution n'est pas adaptée pour un véhicule électrique, car la température de l'air extérieur étant basse, une grande puissance électrique est nécessaire pour réaliser le chauffage, et le temps d'autonomie électrique du véhicule peut être réduit.

Au contraire, afin de réduire la consommation électrique le recyclage de l'air de l'habitacle pour réaliser le chauffage est préférable.

Pour remédier à ces problèmes, on connaît des installations à deux niveaux, c'est-à-dire comprenant deux canaux de distribution d'air logeant les moyens de traitement thermique d'une installation classique pour assurer le confort thermique dans l'habitacle, et chaque niveau peut être alimenté par un flux d'air de même origine ou d'origine distincte.

Ainsi, l'alimentation en flux d'air extérieur et/ou en flux d'air recyclé peut être sélectionnée en fonction des besoins, par exemple en envoyant un flux d'air extérieur vers le pare-brise pour répondre au problème d'embuage des vitres du véhicule, notamment du pare-brise, et en envoyant un flux d'air recyclé vers des sorties d'aération des pieds dans l'habitacle pour un chauffage plus rapide.

Cependant, cette solution nécessite un système de gestion des flux d'air pour répartir les flux d'air extérieur et recyclé selon les besoins.

Un tel système est contraignant car requiert des conduits de contournement pour séparer les flux d'air et distribuer par exemple un flux d'air recyclé dans le deuxième niveau formant par exemple une partie inférieure de l'installation tandis qu'un flux d'air extérieur neuf doit être distribué dans le premier niveau formant dans ce cas la partie supérieure de l'installation. La présence des conduits de contournement implique un encombrement plus important de l'installation dans le véhicule.

De plus, un tel système comporte un ou plusieurs volets pour répartir les flux d'air et est donc plus complexe.

L'invention a donc pour objectif de proposer une installation améliorée permettant de résoudre au moins partiellement les inconvénients de l'art antérieur.

À cet effet, l'invention a pour objet une installation de chauffage, ventilation et/ou climatisation pour un habitacle de véhicule automobile comprenant :
- un premier canal d'admission d'air,
- un premier canal de distribution d'air comprenant au moins une première sortie d'air dans l'habitacle et communiquant avec le premier canal d'admission d'air, et
- un deuxième canal de distribution d'air comprenant une deuxième sortie d'air, ladite installation comprenant en outre un deuxième canal d'admission réservé à un flux d'air recyclé provenant de l'habitacle et en communication aéraulique avec le deuxième canal de distribution d'air, de façon à alimenter le deuxième canal de distribution d'air uniquement par le flux d'air recyclé provenant du deuxième canal d'admission d'air.
   caractérisée en ce que le boîtier comprend une première bouche d'admission pour l'introduction d'un flux d'air extérieur et une deuxième bouche d'admission pour l'introduction d'un premier flux d'air recyclé dans le premier canal d'admission d'air.

Cette solution permet d'implanter une aspiration dédiée au recyclage au niveau du deuxième canal d'admission d'air.

L'invention propose ainsi de distribuer vers les sorties d'air, des flux d'air qui peuvent présenter selon le cas une origine distincte ou une origine commune. Plus précisément, un flux d'air provenant du premier canal d'admission d'air pouvant être alimenté soit par un flux d'air extérieur, soit par un flux d'air recyclé, soit encore un mélange des deux, peut être distribué vers une ou plusieurs premières sorties d'air au niveau du premier canal de distribution d'air.

Au contraire, un flux d'air d'origine distincte du premier flux d'air et totalement recyclé peut être dirigé vers une deuxième sortie d'air séparée des premières sorties d'air, au niveau du deuxième canal de distribution d'air.

Le recyclage permanent d'une partie du flux d'air distribué dans l'habitacle permet de répondre à un besoin de chauffage rapide de l'air tandis que pour des raisons de désembuage par exemple un flux d'air extérieur neuf ou mélangé avec de l'air recyclé peut être envoyé vers le pare-brise.

Avec cette solution, il n'est pas nécessaire de prévoir de conduits de contournement d'un flux d'air pour être distribué de façon sélective dans un canal de distribution d'air.

De plus, l'origine des flux d'air distribués dans chaque canal étant distincte, il n'est pas non plus nécessaire de prévoir de volets pour la répartition de ces deux flux d'air devant alimenter d'une part le premier canal de distribution d'air et d'autre part le deuxième canal de distribution d'air.

Selon un aspect de l'invention, l'installation comprend un groupe moto-ventilateur apte à introduire de l'air dans le premier canal de distribution d'air et dans le deuxième canal de distribution d'air, et comprenant :
- une première partie communiquant d'une part avec le premier canal d'admission d'air et d'autre part avec le premier canal de distribution d'air, et
- une deuxième partie communiquant d'une part avec le deuxième canal d'admission d'un flux d'air recyclé et d'autre part avec le deuxième canal de distribution d'air.

Le recyclage spécifique est implanté du côté du groupe moto-ventilateur. Ce recyclage spécifique fonctionne toujours dès que le groupe moto-ventilateur est actionné.

Selon un mode de réalisation, le groupe moto-ventilateur comprend une roue présentant un bol réalisé en matériau plein et s'étendant entre la première partie et la deuxième partie du groupe moto-ventilateur. Le bol permet de diviser en deux le groupe moto-ventilateur et assure ainsi une séparation des flux d'air provenant du premier canal d'admission d'air et du deuxième canal d'admission d'air dès l'origine des flux d'air.

Selon un aspect de l'invention, le groupe moto-ventilateur comprend des premières pales s'étendant depuis un bord périphérique externe du bol vers une première bordure périphérique externe de la roue et des secondes pales s'étendant à l'opposé des premières pales depuis le bord périphérique externe du bol vers une deuxième bordure périphérique externe de la roue.

Le groupe moto-ventilateur présente deux régions d'aspiration opposées distinctes. La deuxième région d'aspiration est dédiée au recyclage spécifique.

Selon un autre aspect de l'invention, l'installation comprend :
- une volute logeant le groupe moto-ventilateur et
- un moyen d'étanchéité séparant la volute en deux volumes, le premier volume de volute comprenant la première partie du groupe moto-ventilateur, et le deuxième volume de volute comprenant la deuxième partie du groupe moto-ventilateur.

Cette volute est séparée en deux volumes définissant ainsi une partie supérieure et une partie inférieure.

La partie supérieure communique avec le premier canal d'admission d'air correspondant à une entrée d'air classique pouvant être alimenté par de l'air extérieur et/ou de l'air recyclé, qui passe par la volute puis est introduit dans le premier canal de distribution d'air jusqu'aux sorties par exemple de dégivrage et d'aération de tête dans l'habitacle.

La partie inférieure communique avec le deuxième canal d'admission d'air correspondant au recyclage spécifique pour introduire un flux d'air toujours recyclé dans le deuxième canal de distribution d'air jusqu'à une sortie par exemple d'aération des pieds dans l'habitacle.

Le moyen d'étanchéité peut comprendre une paroi agencée entre les deux volumes de la volute et un moyen de maintien de la paroi dans la volute. La paroi permet de partitionner de façon simple la volute.

Selon un mode de réalisation, le moyen de maintien est réalisé d'une seule pièce avec la paroi.

Le moyen d'étanchéité peut comprendre une jupe périphérique sensiblement cylindrique formant maintien de la paroi et reçu dans un logement complémentaire de la volute.

Selon un mode de réalisation, ladite installation comprend au moins un volet de débit agencé dans le deuxième canal d'admission d'air de façon à régler le débit d'air du flux d'air recyclé. Le volet de débit dédié au recyclage permanent permet de gérer le débit du flux d'air recyclé, par exemple en fonction de paramètres du véhicule tel que la vitesse du véhicule.

Selon un aspect de l'invention, l'installation comprend une cloison de séparation agencée entre le premier canal de distribution d'air et le deuxième canal de distribution d'air.

Selon un autre aspect de l'invention, l'installation comprend des moyens de traitement thermique de flux d'air agencés dans le premier canal de distribution d'air et dans le deuxième canal de distribution d'air. Lesdits moyens de traitement thermique sont communs aux deux canaux de distribution d'air.

Lesdits moyens de traitement thermique peuvent comporter respectivement une cloison interne de séparation des flux d'air traversant le premier canal de distribution d'air et le deuxième canal de distribution d'air.

La cloison entre les deux canaux de distribution et les cloisons internes au niveau des moyens de traitement thermique permettant la séparation entre les deux flux d'air jusqu'à la délivrance dans les sorties d'air respectives.

Selon un mode de réalisation de l'invention, un volet de commutation peut être agencé pour mettre en communication les deux canaux de distribution d'air, par exemple pour envoyer une quantité d'air plus importante vers une des sorties d'air.

Selon un mode de réalisation particulier, ladite au moins une première sortie est une sortie de dégivrage orientée vers le pare-brise dudit véhicule ou une sortie d'aération de tête des passagers dans l'habitacle dudit véhicule, et la deuxième sortie est une sortie d'aération orientée vers les pieds des passagers dans l'habitacle.

En envoyant uniquement un flux d'air recyclé vers les pieds, le chauffage peut être réalisé plus rapidement. La proportion d'air extérieur neuf et d'air recyclé à diriger vers les sorties de dégivrage/désembuage et d'aération de tête peut être répartie selon les besoins de dégivrage.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 est une vue en coupe d'une installation de chauffage, ventilation et/ou climatisation à deux étages selon l'invention,
- la figure 2 est une vue schématique d'une volute de l'installation de la figure 1 comprenant un groupe moto-ventilateur,
- la figure 3 est une vue de la roue du groupe moto-ventilateur de la figure 2,
- la figure 4a est une première vue en perspective de la roue de la figure 3, et
- la figure 4b est une deuxième vue en perspective de la roue de la figure 3.

Dans ces figures, les éléments sensiblement identiques portent les mêmes références.

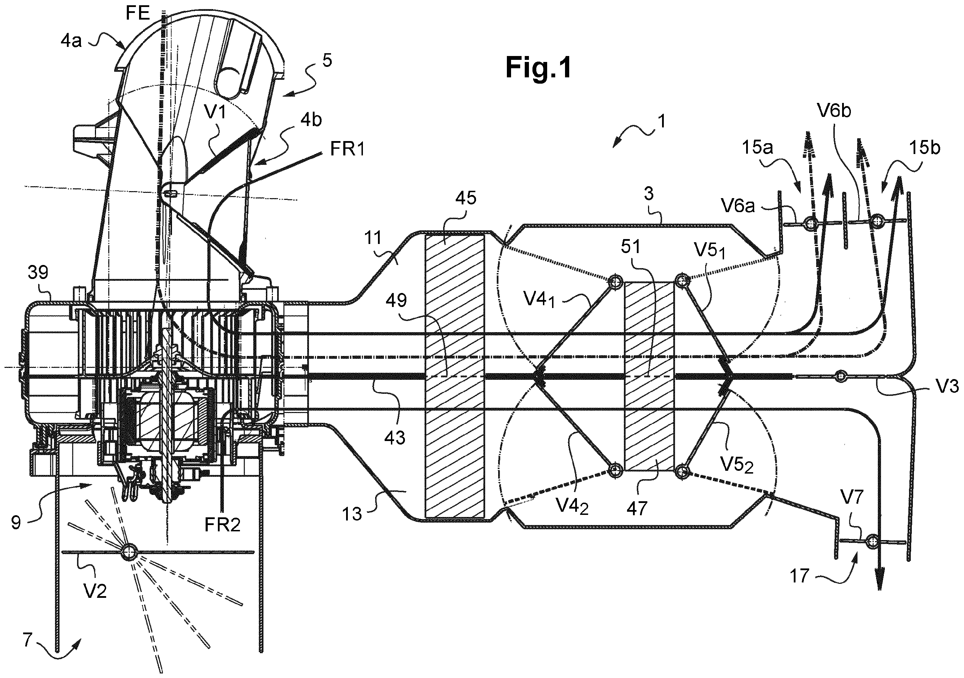

La figure 1 est une vue schématique d'une installation 1 de chauffage, de ventilation et/ou de climatisation destinée à équiper un véhicule automobile pour réguler les paramètres aérothermiques du flux d'air distribué dans une ou plusieurs zones de l'habitacle du véhicule.

L'installation 1 comporte un boîtier 3 comprenant :
- un premier canal d'admission d'air 5,
- un deuxième canal d'admission d'air 7,
- une groupe moto-ventilateur 9 également appelé pulseur pour introduire de l'air dans l'installation 1,
- un premier canal de distribution d'air 11,
- un second canal de distribution d'air 13, et
- plusieurs sorties d'air 15a, 15b et 17.

Le boîtier 3 comprend une première bouche d'admission 4a pour l'introduction d'un flux d'air extérieur FE provenant de l'extérieur du véhicule dans le premier canal d'admission d'air 5 permettant sa circulation dans le volume interne délimité par le boîtier 3.

Le boîtier 3 comprend aussi une deuxième bouche d'admission 4b pour l'introduction d'un premier flux d'air recyclé FR1 provenant de l'habitacle du véhicule et circulant de nouveau dans le volume interne délimité par le boîtier 3.

Bien entendu, les entrées d'air peuvent être inversées, c'est-à-dire que l'air recyclé FR1 peut être appliqué à l'entrée 4a et l'air extérieur FE à l'entrée 4b.

Le premier canal d'admission d'air 5 peut être alimenté aussi bien par le flux d'air extérieur FE ou le premier flux d'air recyclé FR1 que par un mélange des deux flux d'air extérieur FE et recyclé FR1. Le flux d'air extérieur FE et le premier flux d'air de recyclage FR1 sont susceptibles d'être mélangés l'un avec l'autre dans le premier canal d'admission d'air 5.

À cet effet, un organe de mixage d'air, tel qu'un premier volet de mixage V1, monté pivotant permet de répartir en proportion voulue le flux d'air extérieur FE et le premier flux d'air recyclé FR1 à introduire dans le premier canal d'admission d'air 5.

Le volet de mixage V1 est mobile entre deux positions extrêmes de fermeture. Dans une première position de fermeture dite position de recyclage, le volet de mixage V1 interdit le passage du flux d'air extérieur FE vers le premier canal d'admission d'air 5 tout en autorisant un passage du premier flux d'air recyclé FR1 vers le premier canal d'admission d'air 5. Dans la deuxième position de fermeture dite position extérieure, le volet de mixage V1 interdit le passage du flux d'air recyclé FR1 vers le premier canal d'admission d'air 5 tout en autorisant un passage du flux d'air extérieur FE vers le premier canal d'admission d'air 5.

Le volet de mixage V1 est agencé de telle façon qu'il calibre, dans des positions intermédiaires, la proportion du flux d'air extérieur FE et du premier flux d'air recyclé FR1 entrant dans le premier canal d'admission d'air 5.

La course du premier volet V1 est schématisée par des pointillés partant de l'extrémité du premier volet V1 sur la figure 1.

Le deuxième canal d'admission d'air 7 est quant à lui réservé à l'introduction d'un deuxième flux d'air recyclé FR2 provenant de l'habitacle et circulant de nouveau dans l'installation 1.

On peut prévoir un deuxième volet V2 agencé dans le deuxième canal d'admission d'air 7. Il s'agit d'un volet de débit monté pivotant de façon à contrôler le débit du deuxième flux d'air recyclé FR2.

Différentes positions du deuxième volet V2 pour gérer le débit du deuxième flux d'air recyclé FR2 sont illustrées à titre d'exemple sur la figure 1. La gestion du débit peut se faire à titre d'exemple suivant la vitesse du véhicule.

Le débit de ce recyclage spécifique peut être compris entre 10 % et 50 % du débit du flux d'air aspiré provenant du premier canal d'admission d'air 5.

Cependant, le volet de débit V2 ne doit pas être entièrement fermé car il faut laisser passer une certaine quantité d'air pour le refroidissement du moteur.

Le groupe moto-ventilateur également appelé pulseur 9 est agencé de manière à faire circuler un flux d'air depuis le premier canal d'admission d'air 5 ou depuis le deuxième canal d'admission d'air 7 dans l'installation 1 et par la suite vers les sorties d'air 15a, 15b et 17, par exemple une sortie de dégivrage/désembuage 15a, une sortie d'aération de tête 15b et une bouche d'aération de pieds 17.

L'air délivré à travers la bouche de dégivrage/désembuage 15a permet d'alimenter une ou plusieurs buses agencées au niveau du pare-brise du véhicule. La sortie d'aération de tête 15b permet de ventiler une zone supérieure de l'habitacle tandis que la sortie d'aération de pieds 17 permet de ventiler une zone inférieure de l'habitacle.

Plus précisément, le pulseur 9 est agencé en aval du premier canal d'admission 5 selon le sens d'écoulement du flux d'air extérieur FE et du premier flux d'air recyclé FR1 de manière à faire circuler un flux d'air depuis le premier canal d'admission d'air 5 dans l'installation 1, plus précisément dans le premier canal de distribution d'air 11, et par la suite vers les sorties 15a et 15b.

Le pulseur 9 est également agencé en aval du deuxième canal d'admission 7 selon le sens d'écoulement du deuxième flux d'air recyclé FR2 de manière à faire circuler un flux d'air depuis le deuxième canal d'admission d'air 7 dans l'installation 1, plus précisément dans le deuxième canal de distribution d'air 13, et par la suite vers la sortie 17.

Le pulseur 9 permet d'introduire dans le premier canal de distribution d'air 11 soit de l'air extérieur FE prélevé à l'extérieur de l'habitacle, soit de l'air re-circulant prélevé à l'intérieur de l'habitacle dit premier flux d'air recyclé FR1, soit encore un mélange des deux, et dans le deuxième canal de distribution d'air 13 un flux d'air recyclé permanent prélevé à l'intérieur de l'habitacle dit deuxième flux d'air recyclé FR2.

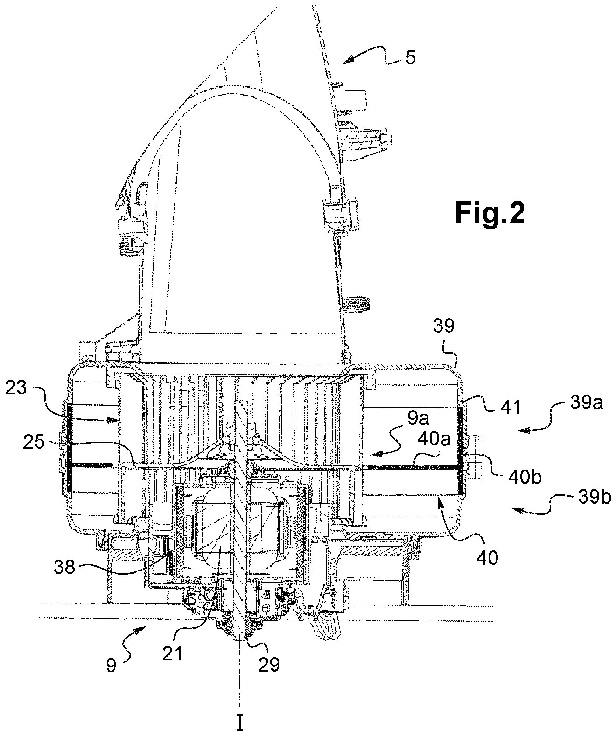

À cet effet, comme cela est mieux visible sur la figure 2, le pulseur 9 présente :
- une première partie 9a dite partie supérieure communiquant avec le premier canal d'admission d'air 5 et avec le premier canal de distribution d'air 11 et
- une deuxième partie 9b dite partie inférieure communiquant avec le deuxième canal d'admission d'air 7 et avec le deuxième canal de distribution d'air 13.

La partie inférieure 9b est donc dédiée au recyclage permanent. Cette partie inférieure 9b pour le recyclage permanent peut être comprise entre 10 % et 35 % en hauteur du pulseur 9.

Plus précisément, le pulseur 9 comprend un ventilateur et un moteur 21 apte à entraîner en rotation le ventilateur autour d'un axe d'entraînement I.

Le ventilateur comprend une roue 23. Le moteur électrique 21 est apte à entraîner en rotation la roue 23 de façon à mettre en mouvement un flux d'air dans l'installation 1.

Selon le mode de réalisation illustré la roue 23 est cylindrique.

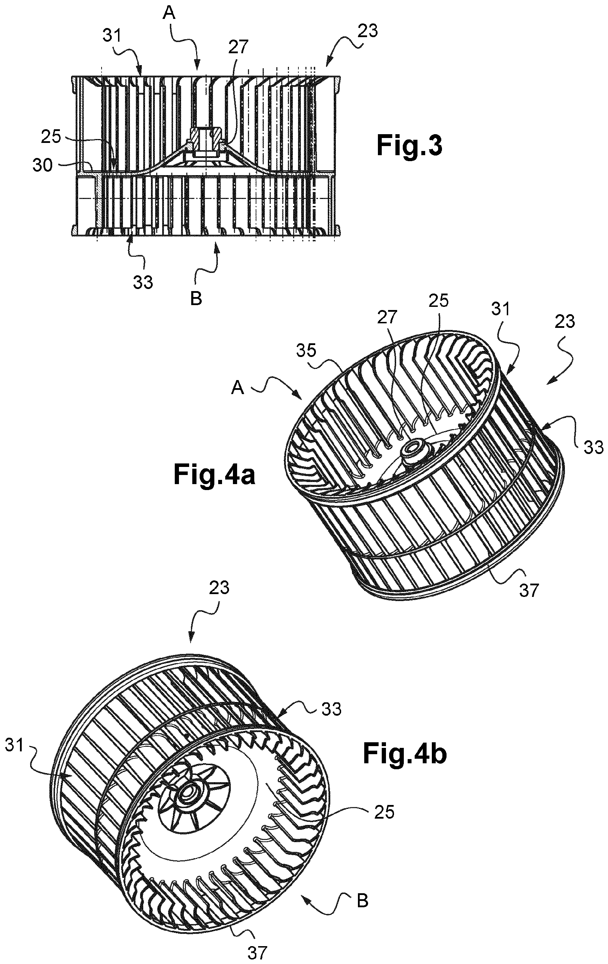

La roue 23 mieux visible sur la figure 3 présente un bol 25.

Le bol 25 est réalisé en matériau plein, de manière à former une séparation étanche entre la partie supérieure 9a du pulseur et la partie inférieure 9b du pulseur 9. Cette séparation réalisée par le bol 25 empêche au flux d'air provenant du premier canal d'admission d'air 5 d'être introduit dans le deuxième canal de distribution 13 par la partie inférieure 9b du pulseur 9, et inversement empêche au flux d'air provenant du deuxième canal d'admission d'air 7 d'être introduit dans le premier canal de distribution 11 par la partie supérieure 9a du pulseur 9.

Le bol 25 comporte sensiblement en son milieu un moyeu 27 dont la fonction est de relier mécaniquement la roue 23 à un arbre moteur 29. Le bol 25 présente de plus un bord périphérique externe 30.

Par ailleurs, la roue 23 présente en outre sur son pourtour des pales ou ailettes 31, 33.

En référence aux figures 3 et 4a, 4b, des premières pales 31 s'étendent depuis le bord périphérique externe 30 du bol 25 vers une première bordure périphérique externe 35 de la roue 23 et des secondes pales 33 s'étendent depuis le bord périphérique externe 30 du bol 25 à l'opposé des premières pales 31 vers une deuxième bordure périphérique externe 37.

Le pulseur 9 présente donc une première face d'extrémité A ouverte délimitée par la première bordure périphérique externe 35 et une deuxième face d'extrémité B ouverte opposée à la première face d'extrémité A ouverte et délimitée par la deuxième bordure périphérique externe 37.

Le pulseur 9 présente une première région d'aspiration d'air et une deuxième région d'aspiration d'air. Selon le mode de réalisation illustré, la première région d'aspiration d'air est située du côté de la première face d'extrémité A de la roue cylindrique et la deuxième région d'aspiration d'air est située du côté de la deuxième face d'extrémité B de la roue cylindrique. La roue 23 de pulseur aspire l'air par ses deux faces d'extrémité A et B ouvertes opposées.

Dans l'exemple illustré sur la figure 1, l'air provenant du premier canal d'admission d'air 5 est évacué par le côté de la partie supérieure 9a du pulseur selon une direction perpendiculaire à la direction d'entrée de l'air à travers la première face d'extrémité A ouverte. De même, l'air recyclé FR2 provenant du deuxième canal d'admission d'air 7 est évacué par le côté de la partie inférieure 9b du pulseur9 selon une direction perpendiculaire à la direction d'entrée de l'air à travers la deuxième face d'extrémité B ouverte.

Concernant le moteur 21, en se référant de nouveau à la figure 2, le moteur 21 comprend une cage 38 qui délimite un volume interne du moteur 21.

Le moteur 21 comprend l'arbre moteur 29 qui traverse la cage 38 de part et d'autre selon l'axe I. Selon l'exemple illustré, l'arbre moteur 29 débouche d'un côté du moteur 21 de manière plus importante que de l'autre côté et passe à travers le moyeu 27 du bol 25 de la roue 23 pour entraîner en rotation la roue 23.

Par ailleurs, le boîtier 3 comprend une volute 39 logeant le pulseur 9.

La volute 39 est divisée en deux volumes : un premier volume 39a comprenant la partie supérieure 9a du pulseur 9 et un deuxième volume 39b comprenant la partie inférieure 9b du pulseur 9.

Le deuxième volume 39b est donc dédié au recyclage permanent et peut être compris entre 10 % et 35 % en hauteur de la volute 39.

Afin d'empêcher toute communication aéraulique entre la partie supérieure 9a et la partie inférieure 9b, la volute 39 comporte un moyen d'étanchéité 40 agencé entre les deux volumes 39a et 39b.

Ce moyen d'étanchéité 40 comprend une paroi 40a séparant les deux volumes 39a et 39b.

La paroi 40a est agencée de façon permanente dans la volute 39 pour séparer les deux flux d'air provenant du premier canal d'admission 5 et du deuxième canal d'admission 7, en permettant ainsi un recyclage permanent du flux d'air au niveau du deuxième canal de distribution 13. La paroi 40a est agencée en position fixe dans la volute 39 autour du pulseur 9.

La paroi 40a au niveau du pulseur 9 permet donc une séparation en deux parties dès l'origine des flux d'air entrants avant distribution dans les canaux respectifs 11 ou 13.

Le moyen d'étanchéité 40 comprend en outre un moyen de maintien 40b de la paroi 40a dans la volute 39.

Selon le mode de réalisation illustré le moyen de maintien 40b est réalisé d'une seule pièce avec la paroi 40a.

À titre d'exemple, le moyen d'étanchéité 40 peut comprendre une jupe périphérique 40b, de forme sensiblement cylindrique dans l'exemple illustré. La jupe périphérique 40b est raccordée à la paroi 40a en s'étendant sensiblement verticalement par rapport au plan défini par la paroi 40a de chaque côté de la paroi 40a. Dans l'exemple illustré sur la figure 2, la jupe périphérique 40b s'étend plus du côté de la paroi 40a en regard du premier volume 39a de volute communiquant avec le premier canal d'admission d'air 5.

La jupe périphérique 40b peut être réalisée d'une seule pièce avec la paroi 40a.

De plus, la jupe périphérique 40b est reçue dans un logement correspondant de la volute 39. Selon l'exemple illustré, ce logement est défini par des épaulements 41 sur les parois latérales de la volute 39. La jupe périphérique cylindrique 40b forme ainsi un moyen de maintien de la paroi 40a dans la volute 39.

On a décrit ci-dessus une installation 1 avec une seule roue 23 entraînée par un moteur 21 pour introduire de l'air aussi bien dans le premier canal de distribution d'air 11 que dans le deuxième canal de distribution d'air 13. On peut prévoir en variante une installation comprenant deux roues respectivement associées à un canal de distribution d'air 11 ou 13.

En ce qui concerne les deux canaux de distribution d'air 11 et 13, en se référant de nouveau à la figure 1, ils sont également séparés par une cloison de séparation 43 agencée entre les deux canaux de distribution d'air 11 et 13. La cloison de séparation 43 est étanche à l'air.

Le boîtier 3 comprend donc deux étages séparés par cette cloison 43 ; le premier étage définissant le premier canal de distribution d'air 11 et le deuxième étage définissant le deuxième canal de distribution d'air 13.

Ainsi, le flux d'air aspiré par la partie supérieure 9a du pulseur 9 provenant du premier canal d'admission d'air 5 s'écoule dans le premier canal de distribution 11 vers les sorties 15a, 15b sans communication aéraulique avec le deuxième canal de distribution d'air 13. De même, le flux d'air recyclé FR2 aspiré par la deuxième partie 9b du pulseur 9 provenant du deuxième canal d'admission d'air 7 s'écoule dans le deuxième canal de distribution d'air 13 vers la sortie 17 sans communication aéraulique avec le premier canal de distribution d'air 11.

Toutefois, dans le cas où une communication entre les deux canaux de distribution d'air 11 et 13 est voulue, la cloison de séparation 43 peut ne pas s'étendre sur toute la longueur du boîtier 3 et on peut prévoir un volet de commutation V3. Le volet V3 est monté pivotant entre une position de fermeture telle qu'illustrée sur la figure 1 et une position d'ouverture permettant une communication entre les deux canaux de distribution d'air 11 et 13.

Cela peut être avantageux lorsqu'une plus grande quantité d'air est souhaitée par exemple au niveau des pieds des passagers.

Par ailleurs, le boîtier 3 loge également des moyens de traitement thermique 45, 47 de l'air préalablement à son évacuation hors du boîtier 3 vers l'habitacle.

Les moyens de traitement thermique 45, 47 sont agencés dans le premier conduit de distribution d'air 11 et dans le deuxième conduit de distribution 13. Plus précisément, les moyens de traitement thermique 45, 47 sont communs aux deux canaux de distribution d'air 11 et 13.

Dans ce cas, les moyens de traitement thermique 45, 47 peuvent comprendre respectivement une cloison interne 49, 51 permettant de séparer les flux d'air provenant du premier 5 ou du deuxième 7 canal d'admission d'air et traversant les moyens de traitement thermique 45 et 47.

Les moyens de traitement thermique 45, 47 sont notamment un évaporateur 45 prévu pour refroidir l'air qui le traverse et un dispositif de chauffage tel qu'un radiateur 47 apte à réchauffer cet air. Le radiateur 47 est éventuellement associé à des résistances électriques de type résistance à coefficient de température positif, communément dénommées « CTP ». Le dispositif de chauffage peut être un échangeur de type air eau, ou air huile, c'est-à-dire dans lequel il y a un échange thermique entre l'air et de l'eau ou de l'huile.

Dans chaque canal de distribution d'air 11, 13, des volets de répartition V4₁, V4₂ ; V5₁, V5₂ peuvent être agencés en amont et en aval du radiateur 47.

Dans le premier canal de distribution d'air 11, le volet V4₁ agencé en amont du radiateur 47 et le volet V5₁ agencé en aval du radiateur 47 selon le sens d'écoulement du flux d'air en provenance du premier canal d'admission d'air 5 sont aptes à autoriser ou empêcher le passage du flux d'air en sortie de l'évaporateur 45 à travers le radiateur 47. Ainsi, le flux d'air en sortie de l'évaporateur 45 peut by-passer le radiateur 47.

Les volets V4₁ et V5₁ sont montés pivotants entre deux positions extrêmes autorisant ou empêchant le passage de tout le flux d'air en sortie de l'évaporateur à travers le radiateur 47. Les volets V4₁ et V5₁ peuvent être pilotés dans des positions intermédiaires de façon à répartir un flux d'air à chauffer dans le radiateur 47 et un flux d'air à ne pas chauffer ne traversant pas le radiateur 47.

Les courses des volets V4₁ et V5₁ sont schématisées en pointillés sur la figure 1.

De façon similaire, dans le deuxième canal de distribution d'air 13, le volet V4₂ agencé en amont du radiateur 47 et le volet V5₂ agencé en aval du radiateur 47 selon le sens d'écoulement du flux d'air recyclé FR2 en provenance du deuxième canal d'admission d'air 7 sont aptes à autoriser ou empêcher le passage du flux d'air en sortie de l'évaporateur 45 à travers le radiateur 47. Ainsi, le flux d'air en sortie de l'évaporateur 45 peut by-passer le radiateur 47.

Les volets V4₂ et V5₂ sont montés pivotants entre deux positions extrêmes autorisant ou empêchant le passage de tout le flux d'air en sortie de l'évaporateur à travers le radiateur 47. Les volets V4₂ et V5₂ peuvent être pilotés dans des positions intermédiaires de façon à répartir un flux d'air à chauffer dans le radiateur 47 et un flux d'air à ne pas chauffer ne traversant pas le radiateur 47.

Les courses des volets V4₂ et V5₂ sont schématisées en pointillés sur la figure 1.

Enfin, chaque sortie d'air 15a, 15b, 17 peut être pourvue d'un volet de distribution d'air respectif V6a, V6b, et V7 qui est manœuvrable entre une position d'ouverture dans laquelle le volet de distribution d'air V6a, V6b, et V7 autorise un passage d'air à travers la sortie d'air 15a, 15b, 17 que le volet de distribution d'air V6a, V6b, et V7 équipe et une position de fermeture dans laquelle le volet de distribution d'air V6a, V6b, et V7 interdit un tel passage.

Ainsi, une telle installation 1 comprenant un boîtier 3 à deux étages permet de gérer l'air en utilisant le premier canal d'admission d'air 5 uniquement pour le premier étage en prélevant de l'air extérieur, recyclé ou un mélange des deux, et en prélevant toujours directement dans l'habitacle l'air pour le deuxième étage.

Le premier étage alimente notamment les sorties d'aération hautes et les sorties de dégivrage / désembuage, tandis que le deuxième étage alimente les sorties d'aération basses arrivant au niveau des pieds des usagers.

En recyclant en permanence le flux d'air à destination des pieds, on obtient un chauffage plus rapide. Le flux d'air pour le premier étage peut être réparti selon les besoins de dégivrage et/ou du confort thermique dans l'habitacle, notamment on peut envoyer plus de flux d'air extérieur, en conséquence plus sec qu'un flux d'air recirculant, pour éviter l'embuage du pare-brise par exemple.

Les deux flux d'air sont séparés dès l'origine en divisant le pulseur 9 de sorte qu'il n'est pas nécessaire de prévoir un système de gestion d'air compliqué avec des volets pour permettre un recyclage du flux d'air pour le deuxième étage du boîtier 3.

La séparation entre les deux étages du boîtier 3 peut se faire de façon simple à l'aide d'une cloison 43 entre les deux canaux de distribution d'air 11, 13.

## Revendications

1. Installation de chauffage, ventilation et/ou climatisation pour un habitacle de véhicule automobile comportant un boitier (3) comprenant :
- un premier canal d'admission d'air (5),
- un premier canal de distribution d'air (11) comprenant au moins une première sortie d'air (15a, 15b) dans l'habitacle et communiquant avec le premier canal d'admission d'air (5), et
- un deuxième canal de distribution d'air (13) comprenant une deuxième sortie d'air (17),
ladite installation (1) comprend en outre un deuxième canal d'admission (7) réservé à un deuxième flux d'air recyclé (FR2) provenant de l'habitacle et en communication aéraulique avec le deuxième canal de distribution d'air (13), de façon à alimenter le deuxième canal de distribution d'air (13) uniquement par le deuxième flux d'air recyclé (FR2) provenant du deuxième canal d'admission d'air (7), charactérisée en ce que le boitier (3) comprend une première bouche d'admission (4a) pour l'introduction d'un flux d'air extérieur (FE) et une deuxième bouche d'admission (4b) pour l'introduction d'un premier flux d'air recyclé (FR1) dans le premier canal d'admission d'air (5),

2. Installation selon la revendication 1, comprenant un groupe moto-ventilateur (9) apte à introduire de l'air dans le premier canal de distribution d'air (11) et dans le deuxième canal de distribution d'air (13), et comprenant :
- une première partie (9a) communiquant d'une part avec le premier canal d'admission d'air (5) et d'autre part avec le premier canal de distribution d'air (11), et
- une deuxième partie (9b) communiquant d'une part avec le deuxième canal d'admission (7) d'un deuxième flux d'air recyclé (FR2) et d'autre part avec le deuxième canal de distribution d'air (13).

3. Installation selon la revendication 2, dans laquelle le groupe moto-ventilateur (9) comprend une roue (23) présentant un bol (25) réalisé en matériau plein et s'étendant entre la première partie (9a) et la deuxième partie (9b) du groupe moto-ventilateur (9).

4. Installation selon la revendication 3, dans laquelle le groupe moto-ventilateur (9) comprend des premières pales (31) s'étendant depuis un bord périphérique externe (30) du bol vers une première bordure périphérique externe (35) de la roue (23) et des secondes pales (33) s'étendant à l'opposé des premières pales (31) depuis le bord périphérique externe (30) du bol vers une deuxième bordure périphérique externe (37) de la roue (23).

5. Installation selon l'une des revendications 2 à 4, comprenant :
- une volute (39) logeant le groupe moto-ventilateur (9) et
- un moyen d'étanchéité (40) séparant la volute (39) en deux volumes (39a, 39b), le premier volume (39a) de volute comprenant la première partie (9a) du groupe moto-ventilateur (9), et le deuxième volume (39b) de volute comprenant la deuxième partie (9b) du groupe moto-ventilateur (9).

6. Installation selon la revendication 5, dans laquelle le moyen d'étanchéité (40) comprend une paroi (40a) agencée entre les deux volumes (39a, 39b) de la volute (39) et un moyen de maintien de la paroi (40a) dans la volute (39).

7. Installation selon la revendication 6, dans laquelle le moyen de maintien est réalisé d'une seule pièce avec la paroi (40a).

8. Installation selon l'une des revendications 6 ou 7, dans laquelle le moyen d'étanchéité (40) comprend une jupe périphérique (40b) sensiblement cylindrique formant maintien de la paroi (40a) et reçu dans un logement complémentaire de la volute (39).

9. Installation selon l'une quelconque des revendications précédentes, comprenant au moins un volet (V2) de débit agencé dans le deuxième canal d'admission d'air (7) de façon à régler le débit d'air du deuxième flux d'air recyclé (FR2).

10. Installation selon l'une quelconque des revendications précédentes, comprenant une cloison de séparation (43) agencée entre le premier canal de distribution d'air (11) et le deuxième canal de distribution d'air (13).

11. Installation selon l'une quelconque des revendications précédentes, comprenant des moyens de traitement thermique (45, 47) de flux d'air agencés dans le premier canal de distribution d'air (11) et dans le deuxième canal de distribution d'air (13), lesdits moyens de traitement thermique (45, 47) :
- sont communs aux deux canaux de distribution d'air (11, 13) et
- comportent respectivement une cloison interne (49, 51) de séparation des flux d'air traversant le premier canal de distribution d'air (11) et le deuxième canal de distribution d'air (13).

12. Installation selon l'une quelconque des revendications précédentes, dans laquelle ladite au moins une première sortie est une sortie de dégivrage (15a) orientée vers le pare-brise dudit véhicule ou une sortie d'aération de tête (15b) des passagers dans l'habitacle dudit véhicule, et la deuxième sortie (17) est une sortie d'aération orientée vers les pieds des passagers dans l'habitacle.

## Patentansprüche

1. Heizungs-, Lüftungs- und/oder Klimaanlage für einen Fahrgastraum eines Kraftfahrzeugs, welche ein Gehäuse (3) aufweist, welches umfasst:
- einen ersten Lufteinlasskanal (5),
- einen ersten Luftverteilungskanal (11), der wenigstens einen ersten Luftauslass (15a, 15b) in den Fahrgastraum umfasst und mit dem ersten Lufteinlasskanal (5) in Verbindung steht, und
- einen zweiten Luftverteilungskanal (13), der einen zweiten Luftauslass (17) umfasst,
wobei die Anlage (1) außerdem einen zweiten Lufteinlasskanal (7) umfasst, der für einen aus dem Fahrgastraum kommenden zweiten zurückgeführten Luftstrom (FR2) reserviert ist und mit dem zweiten Luftverteilungskanal (13) in lufttechnischer Verbindung steht, um den zweiten Luftverteilungskanal (13) ausschließlich mit dem vom zweiten Lufteinlasskanal (7) kommenden zweiten zurückgeführten Luftstrom (FR2) gespeist wird, **dadurch gekennzeichnet, dass** das Gehäuse (3) eine erste Einlassöffnung (4a) zur Einleitung eines äußeren Luftstroms (FE) und eine zweite Einlassöffnung (4b) zur Einleitung eines ersten zurückgeführten Luftstroms (FR1) in den ersten Lufteinlasskanal (5) umfasst.

2. Anlage nach Anspruch 1, welche eine Gebläseeinheit (9) umfasst, die geeignet ist, Luft in den ersten Luftverteilungskanal (11) und in den zweiten Luftverteilungskanal (13) einzuleiten, und umfasst:
- einen ersten Teil (9a), der einerseits mit dem ersten Lufteinlasskanal (5) und andererseits mit dem ersten Luftverteilungskanal (11) in Verbindung steht,
- einen zweiten Teil (9b), der einerseits mit dem zweiten Lufteinlasskanal (7) eines zweiten zurückgeführten Luftstroms (FR2) und andererseits mit dem zweiten Luftverteilungskanal (13) in Verbindung steht.

3. Anlage nach Anspruch 2, wobei die Gebläseeinheit (9) ein Rad (23) umfasst, das eine Schüssel (25) aufweist, die aus massivem Material hergestellt ist und sich zwischen dem ersten Teil (9a) und dem zweiten Teil (9b) der Gebläseeinheit (9) erstreckt.

4. Anlage nach Anspruch 3, wobei die Gebläseeinheit (9) erste Schaufeln (31), die sich von einem äußeren Umfangsrand (30) der Schüssel aus zu einer ersten äußeren Umfangseinfassung (35) des Rades (23) erstrecken, und zweite Schaufeln (33), die sich entgegengesetzt zu den ersten Schaufeln (31) von dem äußeren Umfangsrand (30) der Schüssel aus zu einer zweiten äußeren Umfangseinfassung (37) des Rades (23) erstrecken, umfasst.

5. Anlage nach einem der Ansprüche 2 bis 4, welche umfasst:
- ein Abdeckungsgehäuse (39), das die Gebläseeinheit (9) aufnimmt,
- ein Dichtungsmittel (40), welches das Abdeckungsgehäuse (39) in zwei Volumina (39a, 39b) trennt, wobei das erste Volumen (39a) des Abdeckungsgehäuses den ersten Teil (9a) der Gebläseeinheit (9) umfasst und das zweite Volumen (39b) des Abdeckungsgehäuses den zweiten Teil (9b) der Gebläseeinheit (9) umfasst.

6. Anlage nach Anspruch 5, wobei das Dichtungsmittel (40) eine Wand (40a), die zwischen den zwei Volumina (39a, 39b) des Abdeckungsgehäuses (39) angeordnet ist, und ein Mittel zum Halten der Wand (40a) in dem Abdeckungsgehäuse (39) umfasst.

7. Anlage nach Anspruch 6, wobei das Mittel zum Halten mit der Wand (40a) aus einem Stück hergestellt ist.

8. Anlage nach einem der Ansprüche 6 oder 7, wobei das Dichtungsmittel (40) eine im Wesentlichen zylindrische Umfangsschürze (40b) umfasst, die eine Halterung für die Wand (40a) bildet und in einer komplementären Aufnahme des Abdeckungsgehäuses (39) aufgenommen ist.

9. Anlage nach einem der vorhergehenden Ansprüche, welche wenigstens eine Durchflussregelklappe (V2) umfasst, die in dem zweiten Lufteinlasskanal (7) angeordnet ist, um den Luftdurchsatz des zweiten zurückgeführten Luftstroms (FR2) zu regeln.

10. Anlage nach einem der vorhergehenden Ansprüche, welche eine Trennwand (43) umfasst, die zwischen dem ersten Luftverteilungskanal (11) und dem zweiten Luftverteilungskanal (13) angeordnet ist.

11. Anlage nach einem der vorhergehenden Ansprüche, welche Mittel zur Wärmebehandlung (45, 47) von Luftströmen umfasst, die im ersten Luftverteilungskanal (11) und im zweiten Luftverteilungskanal (13) angeordnet sind, wobei die Mittel zur Wärmebehandlung (45, 47):
- den zwei Luftverteilungskanälen (11, 13) gemeinsam sind und
- jeweils eine innere Trennwand (49, 51) zur Trennung der Luftströme, die durch den ersten Luftverteilungskanal (11) bzw. den zweiten Luftverteilungskanal (13) strömen, aufweisen.

12. Anlage nach einem der vorhergehenden Ansprüche, wobei der wenigstens eine erste Auslass ein Entfrostungsauslass (15a), der zur Windschutzscheibe des Fahrzeugs hin gerichtet ist, oder ein zu den Köpfen der Fahrgäste im Fahrgastraum des Fahrzeugs gerichteter Lüftungsauslass (15b) ist und der zweite Auslass (17) ein zu den Füßen der Fahrgäste im Fahrgastraum des Fahrzeugs gerichteter Lüftungsauslass ist.

## Claims

1. Heating, ventilation and/or air-conditioning installation for a motor vehicle passenger compartment including a casing (3) comprising:
- a first air intake duct (5),
- a first air distribution duct (11) comprising at least one first air outlet (15a, 15b) in the passenger compartment that is in communication with the first air intake duct (5), and
- a second air distribution duct (13) including a second air outlet (17),
said installation (1) further comprises a second intake duct (7) used exclusively for a second recirculated air stream (FR2) coming from the passenger compartment and that is in aeraulic communication with the second air distribution duct (13) so that the second air distribution duct (13) is supplied only by the second recirculated air stream (FR2) coming from the second air intake duct (7), **characterized in that** the casing (3) includes a first intake vent (4a) for bringing an outside air stream (FE) and a second intake vent (4b) for bringing a first recirculated air stream (FR1) into the first air intake duct (5).

2. Installation according to Claim 1, including an engine fan (9) able to blow air into the first air distribution duct (11) and into the second air distribution duct (13), including:
- a first portion (9a) in communication firstly with the first air intake duct (5) and secondly with the first air distribution duct (11), and
- a second portion (9b) in communication firstly with the second intake duct (7) for a second recirculated air stream (FR2) and secondly with the second air distribution duct (13).

3. Installation according to Claim 2, **characterized in that** the engine fan (9) has a wheel (23) with a bowl (25) made of solid material and extending between the first portion (9a) and the second portion (9b) of the engine fan (9).

4. Installation according to Claim 3, **characterized in that** the engine fan (9) has first blades (31) extending from an outer peripheral edge (30) of the bowl towards a first outer peripheral rim (35) of the wheel (23) and second blades (33) extending, opposite the first blades (31), from the outer peripheral edge (30) of the bowl towards a second outer peripheral rim (37) of the wheel (23) .

5. Installation according to one of Claims 2 to 4, including:
- a volute (39) containing the engine fan (9), and
- sealing means (40) separating the volute (39) into two volumes (39a, 39b), the first volute volume (39a) containing the first portion (9a) of the engine fan (9) and the second volute volume (39b) containing the second portion (9b) of the engine fan (9).

6. Installation according to Claim 5, **characterized in that** the sealing means (40) include a wall (40a) arranged between the two volumes (39a, 39b) of the volute (39) and means for holding the wall (40a) in the volute (39).

7. Installation according to Claim 6, **characterized in that** the holding means and the wall (40a) are formed as a single part.

8. Installation according to one of Claims 6 or 7, **characterized in that** the sealing means (40) include a substantially cylindrical peripheral skirt (40b) that holds the wall (40a) and that fits into a matching seat of the volute (39).

9. Installation according to any one of the preceding claims, including at least one adjusting flap (V2) arranged in the second air intake duct (7) to adjust the air flow in the second recirculated air stream (FR2).

10. Installation according to any one of the preceding claims, including a separating partition (43) arranged between the first air distribution duct (11) and the second air distribution duct (13).

11. Installation according to any one of the preceding claims, including heat treatment means (45, 47) for the air stream arranged in the first air distribution duct (11) and in the second air distribution duct (13), said heat treatment means (45, 47):
- being common to the two air distribution ducts (11, 13), and
- including respectively an internal separating partition (49, 51) for separating the air streams flowing through the first air distribution duct (11) and the second air distribution duct (13).

12. Installation according to any one of the preceding claims, **characterized in that** said at least one first outlet is a de-icing outlet (15a) oriented towards the windshield of said vehicle or a passenger head-aeration outlet (15b) in the passenger compartment of said vehicle, and the second outlet (17) is an aeration outlet oriented towards the feet of the passengers in the passenger compartment.
